Europäisches Patentamt

European Patent Office

Office européen des brevets

(19)

(11) Numéro de publication: **0 283 370**
**B1**

(12) **FASCICULE DE BREVET EUROPEEN**

(45) Date de publication du fascicule du brevet:
04.07.90

(51) Int. Cl.⁵: **B60D 1/00**

(21) Numéro de dépôt: **88400488.8**

(22) Date de dépôt: **02.03.88**

(54) **Support de chape ou de crochet d'attelage, à glissières, pour tracteurs.**

(30) Priorité: **05.03.87 FR 8703145**

(43) Date de publication de la demande:
**21.09.88 Bulletin 88/38**

(45) Mention de la délivrance du brevet:
**04.07.90 Bulletin 90/27**

(84) Etats contractants désignés:
**AT BE CH DE ES FR GB GR IT LI LU NL SE**

(56) Documents cités:
**EP-A- 0 016 317**
**EP-A- 0 179 422**
**DE-A- 3 441 897**
**FR-A- 1 255 203**
**FR-A- 2 577 854**
**US-A- 4 062 560**

(73) Titulaire: **SODISENE FABRICATION SA, 10, rue Courmeaux, F-51100 Reims(FR)**

(72) Inventeur: **Mijot, Guy, 3, rue des 16 et 22ème dragons, F-51100 Reims(FR)**

(74) Mandataire: **Gérardin, Robert Jean René, PROT'INNOV INTERNATIONAL SA Résidence de l'Observatoire avenue Georges Clémenceau Boîte Postale 2764, F-51066 Reims Cédex(FR)**

ACTORUM AG

## Description

L'invention concerne un support de chape ou de crochet d'attelage, à glissières, pour tracteurs.

Il est connu d'assurer le déplacement de matériels roulants non motorisés, à l'aide de tracteurs comportant un dispositif d'attelage équipé d'un crochet, d'une chape ou d'un autre système de remorquage, auquel se fixe le timon de l'engin tracté.

Il est connu aussi d'utiliser, pour faciliter l'adaptation du dispositif d'attelage au timon de l'engin et de la distance par rapport au sol de celui-ci, un support de chape ou de crochet d'attelage amovible, réglable en hauteur par l'intermédiaire de glissières comportant chacune une série de cavités ou d'échancrures, destinées à recevoir l'extrémité d'un doigt ou d'un axe d'immobilisation manoeuvrable par l'intermédiaire d'un système de levier. De tels supports sont décrits dans les brevets **FR-A- 1 255 203** et **EP-A 0 016 317**.

Sur ces supports de chape, l'indexation des doigts ou des axes, dans les cavités ou les échancrures des crémaillères, exige un certain tâtonnement et un effort physique assez important, compte-tenu de la cinématique des systèmes de manoeuvre et du fait que les supports de chape sont soumis à des projections d'eau et de boue qui entraînent une immobilisation progressive, par la rouille et le sable, des doigts ou des axes dans leur logement, et de leurs organes de manoeuvre ; ce qui oblige souvent à recourir, pour le démontage, à des moyens mécaniques qui ne font généralement pas parties de l'outillage de bord des tracteurs.

La présente invention vise à remédier à ces inconvénients. L'invention, telle qu'elle est caractérisée, résout le problème consistant à créer un support de chape ou de crochet d'attelage amovible, facile à mettre en place, à régler et à démonter, offrant les meilleures garanties de sécurité et des performances élevées.

Cette invention se caractérise principalement en ce que les séries d'échancrures, destinées à recevoir chacune des extrémités d'un axe d'immobilisation, sont constituées de deux crémaillères, montées en vis à vis parmi les dents desquelles viennent s'encastrer latéralement et simultanément, ainsi que dans des empreintes situées sur la face avant du support, un axe d'immobilisation, réalisé en une seule partie, manoeuvrable transversalement par l'intermédiaire d'un levier en fourche, articulé par rapport au support de chape ou de crochet, dont l'extrémité inférieure, supportant l'axe d'immobilisation est rappelée en permanence, vers les empreintes situées sur la face avant du support, par un ressort et dont l'extrémité supérieure comporte une poignée permettant le basculement du levier et la libération de l'axe d'immobilisation par rapprochement de ladite poignée d'une anse de manoeuvre et de manutention du support, fixée à la partie supérieure de celui-ci, de façon que les deux poignées soient situées à la même hauteur.

Le verrouillage du levier d'immobilisation parmi les dents des crémaillères et dans les empreintes situées sur la face avant du support est obtenu par l'intermédiaire d'une butée escamotable disposée entre le levier en fourche et la face avant du support, au dessus de l'axe d'articulation dudit levier en fourche.

Cette butée escamotable est constituée d'un levier, rappelé vers le support par un ressort, articulé par rapport à l'une des branches du levier en fourche par l'intermédiaire d'une chape et d'un axe, comportant un épaulement destiné à venir prendre appui contre la face avant du support. Le débattement du levier en fourche est délimité par un ergot, dont la hauteur est déterminée pour que l'épaulement de la butée escamotable reste en appui sur le bord supérieur du support sans pouvoir franchir celuici et de façon que la poignée de manoeuvre du levier en fourche ne vienne pas en contact avec l'anse du support.

L'axe d'immobilisation est monté flottant, dans un plan vertical, par rapport au levier en fourche de manoeuvre. La liberté de déplacement ainsi laissée à l'axe d'immobilisation dans son logement permet de compenser le désalignement des dents des crémaillères ou une légère rotation du support de chape par rapport aux glissières.

Le logement de cet axe d'immobilisation est constitué d'un fourreau, oblong dans le sens vertical, situé à l'extrémité inférieure des branches du levier en fourche. L'axe d'immobilisation est maintenu en place longitudinalement dans son fourreau par l'intermédiaire de joncs d'arrêt, de goupilles ou autres moyens d'arrêt du genre.

L'écartement des bras du levier en fourche et la largeur de ceux-ci sont déterminés pour protéger la main de l'opérateur des contacts accidentels avec les dents des crémaillères.

Les avantages obtenus, grâce à cette invention, consistent essentiellement en ceci que l'axe d'immobilisation, compte-tenu de la liberté qui lui est laissée en rotation et en débattement et du fait qu'il n'entre en contact avec les flancs des dents des crémaillères que par une génératrice, peut être encastré dans lesdites crémaillères, sans tâtonnement et sans effort, et être désengagé aisément, même après une utilisation de longue durée dans des conditions très sévères. L'immobilisation verticale du support par rapport aux crémaillères est obtenue à la fois par l'insertion de l'axe d'immobilisation dans des empreintes situées sur la face avant du support et parmi les dents des deux crémaillères. Le support de chape peut donc être ainsi rapidement et aisément réglé en hauteur par le conducteur du tracteur en fonction de l'utilisation, sans qu'il soit nécessaire de recourir à un outillage quelconque et sans démontage d'organes. Ledit support de chape selon l'invention peut être, de plus, avantageusement combiné à un système d'attelage à amortisseur, tel que celui décrit dans la demande de brevet Français **FR-A2 568 194**.

D'autres caractéristiques et avantages apparaîtront dans la description qui va suivre d'un support de chape selon l'invention, équipé d'un attelage à amortisseur tel que décrit dans la demande de brevet Français **FRA- 2 568 194**, donné à titre d'exemple non limitatif au regard des dessins annexés sur lesquels :

- la figure **1** représente une vue de côté en demicoupe du support de chape sur laquelle la position escamotée de l'axe d'immobilisation est indiquée en trait mixte,

- la figure **2** représente une vue de dessus, en demicoupe, du support de chape,

- la figure **3** représente une vue de face du support de chape.

Les figures représentent un support de chape à glissières pour tracteurs comprenant essentiellement un support**1** à empreintes de centrage **1a** et **1b**, supportant une chape à amortisseur **2**, guidé latéralement par l'intermédiaire de glissières **3** et **4** situées à l'avant de flasques **5** et**6** rendues solidaires du châssis du tracteur, immobilisable par rapport aux glissières **3** et **4** par l'intermédiaire de crémaillères **7** et **8** des empreintes de centrage **1a** et**1b**, d'un axe**9** monté dans un fourreau oblong **10** situé à l'extrémité d'un levier en fourche **11**, muni d'une poignée**12**, articulé par rapport au support **1** par l'intermédiaire d'un axe**13** et rappelé contre celui-ci par un ressort**14** ; l'axe d'immobilisation**9** pouvant être verrouillé par rapport aux empreintes**1a** et **1b** et aux crémaillères **7** et **8** par l'intermédiaire d'une butée escamotable de sécurité constituée d'un levier **15** comportant un épaulement**16**, rappelé vers le support**1** par un ressort **17**, articulé par rapport à l'une des branches **11a** du levier en fourche par l'intermédiaire d'une chape **18** et d'un axe **19** ; le support de chape **1** étant muni d'une anse **20** à sa partie supérieure.

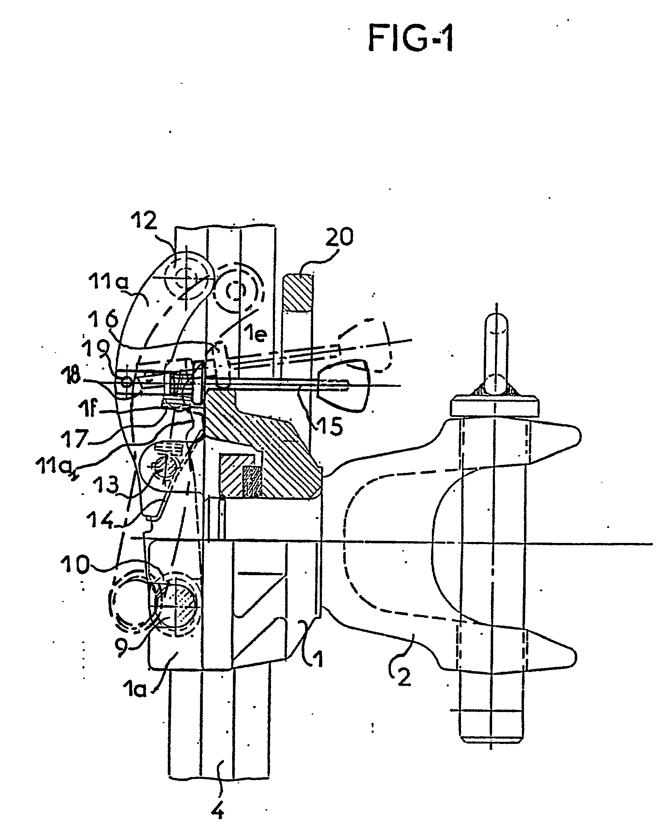

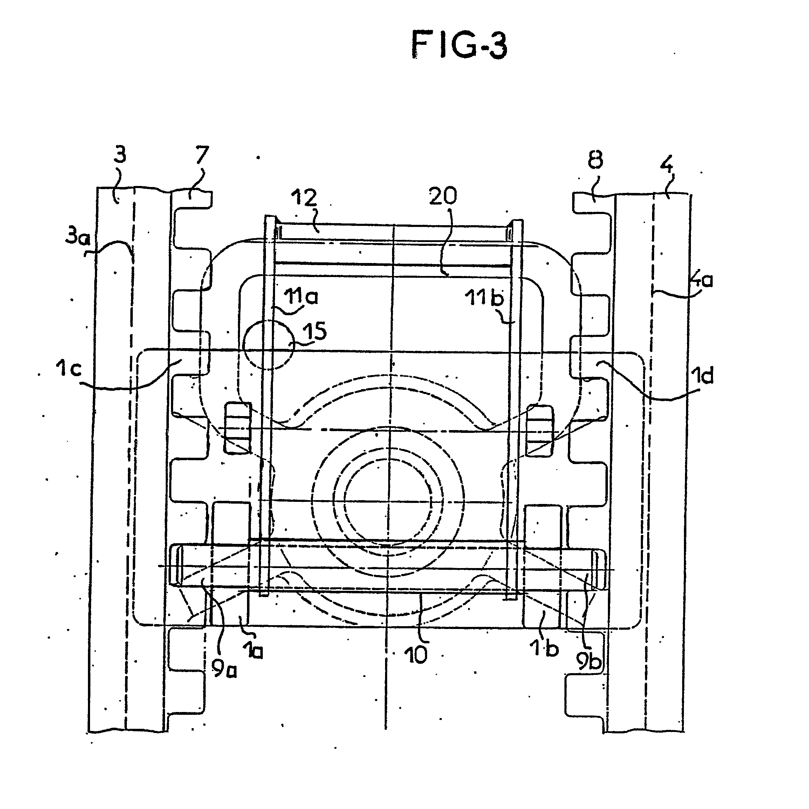

En examinant plus en détail les figures**1**, **2** et **3**, on remarque que l'axe d'immobilisation**9** est monté dans un fourreau oblong **10** situé à l'extrémité inférieure des branches **11a** et **11b** du levier à fourche**11**.

Lorsque la traction exercée sur la poignée **12** du levier en fourche **11** est annulée, l'axe **9**, sous l'action du ressort de rappel**14** du levier **11**, roule sur l'extrémité des dents, contre lesquelles il entre en contact pour, compte-tenu du débattement qui lui est laissé, retomber dans le creux situé au dessus ou au dessous des dents concernées ainsi que dans les empreintes**1a** et **1b**; ce qui élimine ainsi tout tâtonnement. L'introduction de l'axe entre deux dents est d'ailleurs favorisée par la forme arrondie des angles situés à la partie supérieure des dents et par le débattement vertical laissé à l'axe dans son fourreau. La profondeur des empreintes **1a** et**1b** peut être telle que l'axe d'immobilisation reste toujours guidé par les bords de celles-ci.

Ainsi, pour mettre en place le support de chape **1** et amener celui-ci à la position désirée, il suffit d'engager les ailes **1c** et **1d** du support dans les rainures**3a** et**4a** des glissières, en s'aidant de l'anse**20** dont est muni le support de chape **1** tout en exerçant une traction avec les doigts sur la poignée **12** du levier en fourche**11**, jusqu'à mise en contact de l'ergot **11 a1** contre la face avant **1f** du support **1**, après avoir soulevé le levier de manoeuvre comportant l'épaulement **16** servant de butée escamotable de sécurité, afin de faire reposer ce dernier sur le bord supérieur **1e** du support de chape**1**, puis de laisser coulisser l'ensemble par rapport aux glissières, jusqu'à obtention de la hauteur, par rapport au sol, désirée; le simple relâchement de la poignée **12** de manoeuvre du levier en fourche **11** provoquera l'insertion immédiate de l'axe d'immobilisation**9** dans les empreintes**1a** et **1b** et entre les dents des crémaillères les plus proches, ainsi que le verrouillage de sécurité instantané de cet axe par rapport aux deux crémaillères **7** et **8**, par suite de la retombée de l'épaulement**16** de la butée escamotable de sécurité devant la face avant **1f** du support**1**, sous l'action du ressort **17** relié à l'axe d'articulation**13** du levier en fourche **11**. Aucune modification de position ne peut, à partir de ce moment, être effectuée sans effacement de la butée de sécurité par un acte volontaire.

Pour le démontage ou le réglage, il suffit de soulever le levier **15** de manoeuvre de la butée de sécurité escamotable tout en exerçant une traction avec les doigts sur la poignée **12** du levier en fourche **11**, jusqu'à entrée en contact de l'ergot **11 a1**, situé sur le bord arrière de la branche**11a** dudit levier en fourche, avec la face avant**1f** du support **1**. Les extrémités **9a** et **9b** de l'axe d'immobilisation **9** étant alors désengagés des crémaillères**7** et **8**, le support peut être, à partir de ce moment abaissé ou relevé en vue d'un changement de réglage en hauteur, ou sorti des glissières en vue, par exemple, de son remplacement par un support équipé d'un autre moyen de remorquage (remplacement d'un croc par une chape, par exemple).

L'anse de manutention **20** est située dans un plan vertical situé le plus près possible de celui passant par le centre de gravité du support équipé, afin d'obtenir un coulissement aussi régulier que possible des ailes**1c** et **1d** du support **1** dans les rainures**3a** et **4a** des glissières.

Les empreintes **1a** et **1b** situées sur la face**1f** avant du support **1** sont disposées symétriquement par rapport au plan de symétrie longitudinale dudit support, en bordure de la zone couverte par les dents des crémaillères**7** et**8**, afin qu'il ne subsiste qu'un espace aussi réduit que possible entre le bord externe desdites empreintes**1a** et **1b** et l'extrémité des dents des crémaillères; ceci afin que l'axe **9** ne soit sollicité qu'au cisaillement.

Les branches **11a** et **11b** du levier en fourche assurent une protection latérale de la main de l'opérateur contre un éventuel contact de celles-ci avec les dents des crémaillères; aussi leur écartement et leur largeur sont-elles déterminées en conséquence.

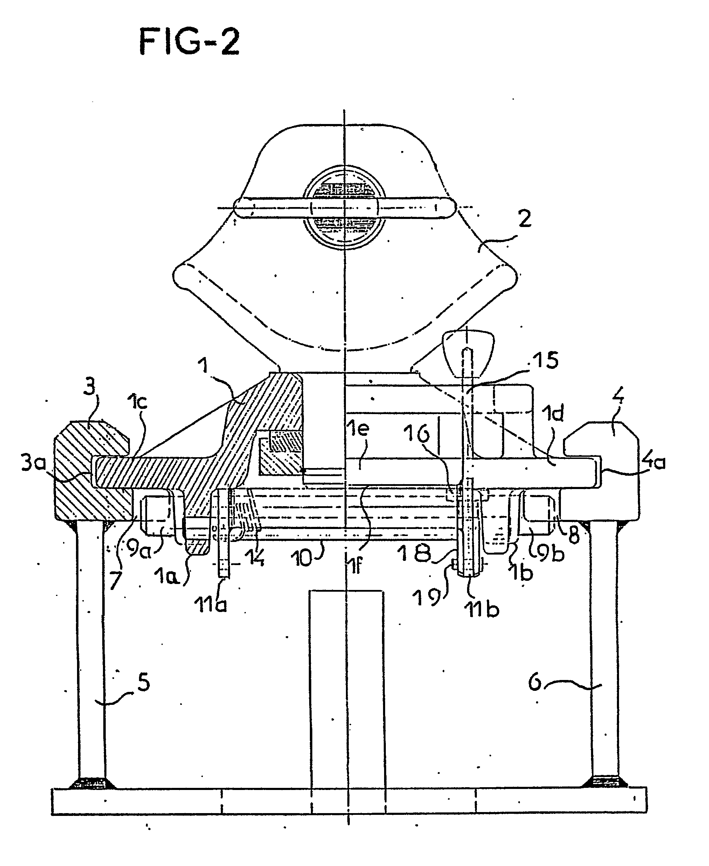

En examinant plus particulièrement la figure **2**, on remarque que les efforts en traction et en poussée exercés sur la chape **2** sont transmis au châssis du tracteur par l'intermédiaire des ailes **1a** et **1b** du support de chape**1**, des glissières **3** et **4** et des flasques **5** et**6** ; ces organes, étant optimisés dans leurs dimensions assurent une retransmission desdits efforts en toute sécurité. Les composantes verticales des efforts appliqués sur la chape **2** sont transmises, quant à elles, au châssis du tracteur par l'intermédiaire des empreintes**1a** et**1b** du support de chape **1**, de l'axe d'immobilisation**9**, des crémaillères **5** et**6**, des glissières **3** et **4** et des flasques**5** et **6**. Ces organes étant, comme on le voit eux aussi, optimisés dans leurs dimensions, lesdites composantes verticales sont, comme les efforts horizontaux, transmis au tracteur en toute sécurité.

Le support de chape selon l'invention est destiné principalement à équiper des tracteurs agricoles, mais il pourrait être utilisé aussi, avantageusement, pour équiper des tracteurs ou des engins motorisés, destinés à remorquer toutes sortes de matériels roulants, tels que des matériels de travaux publics par exemple.

## Revendications

1. Support de chape (1) ou de crochet d'attelage amovible, à glissières (3, 4), pour tracteurs, réglable en hauteur par l'intermédiaire de glissières (3, 4), comportant chacune une série de cavités ou d'échancrures destinées à recevoir l'extrémité d'un deight ou d'un axe d'immobilisation (9) manoeuvrable par l'intermédiaire d'un levier (11), caractérisé en ce que les séries d'échancrures destinées à recevoir l'extrémité d'un axe d'immobilisation (9) sont constituées de deux crémaillères (7 et 8) montées en vis à vis sur les glissières (3 et 4), en ce que la face avant du support de chape (1) comporte des empreintes (1a et 1b) destinées à recevoir l'axe d'immobilisation (9), en ce que l'axe d'immobilisation (9) est réalisé en une seule partie dont les extrémités (9a et9b) viennent s'insérer latéralement parmi les dents des crémaillères (7 et 8), en ce que ledit axe d'immobilisation (9) est manoeuvré transversalement par l'intermédiaire d'un levier en fourche (11), articulé par rapport à la face avant (1f) du support, dont l'extrémité inférieure, rappelée vers la face avant (1f) du support (1) par un ressort, est prolongée par un fourreau (10), oblong dans le sens vertical, servant de logement à l'axe (9), dont l'extrémité supérieure comporte une poignée de manoeuvre (12) et dont l'une au moins, des branches (11a) comporte un ergot (11 a1) limitant le débattement dudit levier en fourche (11) vers la face avant (1f) du support de chape (1) en ce que le verrouillage de l'axe d'immobilisation (9) par rapport aux crémaillères (7 et 8) et aux empreintes (1a et 1b) situées sur la face avant (1f) du support de chape (1) est obtenu par l'intermédiaire d'une butée escamotable de sécurité disposée entre le levier en fourche (11) et la face avant (1f) du support de chape (1), au dessus de l'axe d'articulation (13) du levier en fourche (11) et en ce que le support de chape (1) est équipé d'une anse (20) dont la poignée est située au niveau de la poignée de manoeuvre (12) du levier en fourche (11).

2. Support de chape ou de crochet d'attelage selon la revendication 1 caractérisé en ce que la butée escamotable de sécurité, assurant le verrouillage de l'axe d'immobilisation (9) par rapport aux crémaillères (7 et 8) et aux empreintes (1a et1b) situées sur la face avant (1f) du support (1) est constituée d'un levier (15), comportant un épaulement (16), rappelé vers le bord supérieur (1e) du support (1) par un ressort (17) relié à l'axe d'articulation (13) du levier en fourche (11), articulé par rapport à l'une des branches (11b) du levier en fourche (11) par l'intermédiaire d'une chape (18) et d'un axe (19).

3. Support de chape ou de crochet selon les revendications1 et 2, caractérisé en ce que la hauteur de l'ergot (11 a1), limitant le débattement du levier en fourche (11), est déterminée pour que l'épaulement (16) du levier (15) de la butée escamotable, reste en appui sur le bord supérieur (1e) du support (1) sans franchir celuici et que la poignée (12) du levier en fourche (11) ne vienne pas porter contre l'anse (20) de manutention du support (1), lorsque le levier en fourche (11) est basculé vers le support (1) pour obtenir le désengagement de l'axe d'immobilisation (9) des crémaillères (7 et8) et des empreintes (1a et1b) situées sur la face avant (1f) du support (1).

4. Support de chape ou de crochet selon la revendication1 caractérisé en ce que les empreintes (1a et 1b) situées sur la face avant (1f) du support (1) sont situées symétriquement par rapport au plan de symétrie longitudinal du support, en bordure de la zone couverte par les dents des crémaillères (7 et 8).

5. Support de chape ou de crochet selon la revendication1, caractérisé en ce que la liberté laissée à l'axe (9), dans son fourreau oblong (10), est déterminée pour compenser verticalement un certain désalignement des crémaillères (7 et 8) l'une par rapport à l'autre ou une certaine rotation du support (1) dans ses glissières (7 et 8) et pour permettre la rotation sur lui-même dudit axe (9).

6. Support de chape ou de crochet selon la revendication1, caractérisé en ce que l'axe d'immobilisation (9) est maintenu en place, longitudinalement, par deux joncs d'arrêt disposés de chaque côté du fourreau oblong (10).

7. Support de chape ou de crochet selon la revendication (1) caractérisé en ce que l'écartement des bras (11a et11b) du levier en fourche (11) et leur longueur sont déterminés pour protéger la main de l'opérateur contre les contacts accidentels avec les dents des crémaillères lors de la manoeuvre du support (1).

8. Support de chape ou de crochet selon la revendication1, caractérisé en ce que l'anse (20) de manutention du support (1) est située dans un plan vertical aussi voisin que possible de celui passant par le centre de gravité de l'ensemble.

## Patentansprüche

1. Träger für ein Kupplungsmaul (1) oder für eine abnehmbare Hakenkupplung, mit Führungsschienen (3, 4), für Zugmaschinen, der mittels Führungsschienen (3, 4) höhenverstellbar ist, von denen jede eine Reihe von Ausnehmungen oder Ausschnitten aufweist, die dazu dienen, das Ende eines Fingers oder einer Feststellachse (9), welche(r) mittels eines Hebels (11) betätigbar ist, aufzunehmen, dadurch gekennzeichnet, daß die Reihen der zur Aufnahme des Endes einer Feststellachse (9) dienenden Ausschnitte von zwei Zahnstangen (7 und 8) gebildet sind, die einander gegenüberliegend jeweils an den Führungsschienen (3, 4) befestigt sind, daß an der Vorderseite des Kupplungsmaulträgers (1) Aufnahmeeinrichtungen (1a und 1b) zur Aufnahme der Feststellachse (9) angeordnet sind, daß die Feststellachse (9) als ein einziges Teil ausgebildet ist, dessen Enden (9a und 9b) seitlich zwischen die Zähne der Zahnstangen (7 und 8) eingreifen, daß die Feststellachse (9) mittels eines Gabelhebels (11) in der Querrichtung bewegbar ist, der an der Vorderseite (1f) des Trägers angelenkt ist und dessen unteres Ende, das durch eine Feder zur Vorderseite (1f) des Trägers (1) vorgespannt wird, durch eine in vertikaler Richtung länglich ausgebildete Buchse (10) verlängert ist und als Aufnahme für die Achse (9) dient, dessen oberes Ende einen Bedienungsgriff (12) aufweist und dessen wenigstens einer Hebelarm (11a) einen Nocken (11a1) aufweist, der das Federungsspiel des Gabelhebels (11) zur Vorderseite (1f) des Kupplungsmaulträgers (1) hin begrenzt, daß die Verriegelung der Feststellachse (9) bezüglich der Zahnstangen (7 und 8) und der Aufnahmeeinrichtungen (1a und 1b), die an der Vorderseite (1f) des Trägers des Kupplungsmauls (1) angeordnet sind, mittels eines versenkbaren Sicherheitsanschlages erfolgt, der zwischen dem Gabelhebel (11) und der Vorderseite (1f) des Kupplungsmaulträgers (1) oberhalb des Gelenkbolzens (13) des Gabelhebels (11) angeordnet ist, und daß der Kupplungsmaulträger (1) mit einem Bügel (20) ausgerüstet ist, dessen Griff sich auf der Höhe des Bedienungsgriffes (12) des Gabelhebels (11) befindet.

2. Träger für ein Kupplungsmaul oder einen Haken nach Anspruch 1, dadurch gekennzeichnet, daß der versenkbare Sicherheitsanschlag, der die Verriegelung der Feststellachse (9) bezüglich der Zahnstangen (7 und 8) und der Aufnahmeeinrichtungen (1a und 1b), die an der Vorderseite (1f) des Trägers angeordnet sind, gewährleistet, als Hebel (15) ausgebildet ist, der eine Schulter (16) aufweist, die zur Oberkante (1e) des Trägers (1) durch eine mit dem Gelenkbolzen (13) des Gabelhebels (11) verbundene Feder (17) vorgespannt ist und an einem der Hebelarme (11b) des Gabelhebels (11) mittels einer Gabel (18) und einer Achse (19) angelenkt ist.

3. Träger für ein Kupplungsmaul oder einen Haken nach Anspruch 1 und 2, dadurch gekennzeichnet, daß die Höhe des das Federungsspiel des Gabelhebels (11) begrenzenden Nockens (11a1) derart festgelegt ist, daß die Schulter (16) des Hebels (15) des versenkbaren Anschlages an der Oberkante (1e) des Trägers (1) angedrückt bleibt, ohne über diese hinauszugehen, und daß der Griff (12) des Gabelhebels (11) nicht an den Bügel (20) zum Handhaben des Trägers (1) anschlägt, wenn der Gabelhebel (11) zu dem Träger (1) hin verschwenkt wird, um die Feststellachse (9) aus den Zahnstangen (7 und 8) und den Aufnahmeeinrichtungen (1a und 1b), die an der Vorderseite (1f) des Trägers (1) angeordnet sind, zu lösen.

4. Träger für ein Kupplungsmaul oder einen Haken nach Anspruch 1, dadurch gekennzeichnet, daß die an der Vorderseite (1f) des Trägers (1) angeordneten Aufnahmeeinrichtungen (1a und 1b) symmetrisch bezüglich der Längssymmetrieachse des Trägers am Rand des durch die Zähne der Zahnstangen (7 und 8) abgedeckten Bereiches angeordnet sind.

5. Träger für ein Kupplungsmaul oder einen Haken nach Anspruch 1, dadurch gekennzeichnet, daß die Bewegungsfreiheit der Achse (9) in ihrer länglichen Buchse (10) derart festgelegt ist, daß eine gewisse Fluchtlinienabweichung der Zahnstangen (7 und 8) in Bezug auf einander oder eine gewisse Drehung des Trägers (1) in seinen Führungsschienen (3 und 4) in vertikaler Richtung kompensiert wird und daß die Rotation der Achse (9) um sich selbst ermöglicht wird.

6. Träger für ein Kupplungsmaul oder einen Haken nach Anspruch 1, dadurch gekennzeichnet, daß die Feststellachse (9) in Längsrichtung durch zwei Sicherungsringe in Position gehalten wird, die auf beiden Seiten der länglichen Buchse (10) angeordnet sind.

7. Träger für ein Kupplungsmaul oder einen Haken nach Anspruch 1, dadurch gekennzeichnet, daß die lichte Weite der Hebelarme (11a und 11b) des Gabelhebels (11) und ihre Länge derart festgesetzt sind, daß die Hand des Bedieners gegen zufällige Kontakte mit den Zähnen der Zahnstangen bei der Handhabung des Trägers (1) geschützt ist.

8. Träger für ein Kupplungsmaul oder einen Haken nach Anspruch 1, dadurch gekennzeichnet, daß der Bügel (20) zur Handhabung des Trägers (1) in einer Vertikalebene gelegen ist, die so nahe wie möglich bei derjenigen angeordnet ist, die durch den Schwerpunkt der ganzen Einheit geht.

**Claims**

1. A support for a coupler head (1) or for a removable tow-hook, with slides (3, 4), for tractors, the height of which is adjustable by means of slides (3, 4), each comprising a series of cavities, or of notches designed to receive the end of an immobilization finger or shaft (9), operable by means of a lever (11), characterized in that the series of notches designed to receive the end of an immobilization shaft (9) are made up of two racks (7 and 8) mounted facing each other on the slides (3 and 4), in that the front face of the coupler head support (1) has impressions (1a and 1b) intended to receive the immobilization shaft (9), in that the immobilization shaft (9) is made as a single part the ends (9a and 9b) of which insert themselves laterally among the teeth of the racks (7 and 8), in that the said immobilization shaft (9) is operated transversally by means of a forked lever (11) pivoted relative to the front face of the support (1f), the bottom end of which, recalled towards the front face (1f) of the support (1) by a spring, is extended by a sleeve (10), oblong in the vertical direction, acting as a housing for the shaft (9) the upper end of which has an operating handle (12), and of which one at least of the branches (11a) has a toe (11a1) limiting the movement of the said forked lever (11) towards the front face (1f) of the coupler head (1) support, in that the locking of the immobilization shaft (9) relaltive to the racks (7 and 8) and to the impressions (1a and 1b) situated on the front face (1f) of the coupler head support (1) is obtained by means of a retractable safety stop mounted between the forked lever (11) and the front face (1f) of the coupler head support (1), above the pivoting axis (13) of the forked lever (11), and in that the coupler head support (1) is fitted with a handle (20) the grip of which is situated at the level of the operating handle (2) of the forked lever (11).

2. A coupler head or tow-hook support according to claim 1, characterized in that the retractable safety stop effecting the locking of the immobilization shaft (9) relative to the racks (7 and 8) and to the impressions (1a and 1b) situated on the front face (1f) of the support (1) is constituted by a lever (15) having a shoulder (16) recalled towards the upper edge (1e) of the support (1) by a spring (17) connected to the pivoting axis (13) of the forked lever (11), pivoted relative to one of the branches (11b) of the forked lever (11) by means of a fork joint (18) and an axis (19).

3. A coupler head or tow-hook support according to claims 1 and 2, characterized in that the height of the toe (11a1) limiting the movement of the forked lever (11) is determined so that the shoulder (16) of the lever (15) of the retractable stop remains acting on the upper edge (1e) of the support (1) without going across the latter and without the handle (12) of the forked lever (11) coming to act against the operating handle (20) of the support (1) when the forked lever (11) is pivoted towards the support (1) to obtain the release of the immobilization shaft (9) of the racks (7 and 8) and of the impressions (1a and 1b) situated on the front face (1f) of the support (1).

4. A coupler head or tow-hook support according to claim 1, characterized in that the impressions (1a and 1b) situated on the front face (1f) of the support (1) are situated symmetrically relative to the longitudinal plane of symmetry of the support, on the edge of the region covered by the teeth of the racks (7 and 8).

5. A coupler head or tow-hook support according to claim 1, characterized in that the freedom allowed to the shaft (9) in its oblong sleeve (10) is determined to compensate vertically a certain misalignment of the racks (7 and 8) relative to each other, or a certain rotation of the support (1) in the slides (3 and 4) and to permit the rotation of the said shaft (9) on itself.

6. A coupler head or tow-hook support according to claim 1, characterized in that the immobilization shaft (9) is held in place longitudinally by two circlips disposed on each side of the oblong sleeve (10).

7. A coupler head or two-hook support according to claim 1, characterized in that the space between the branches (11a and 11b) of the forked lever (11) and their length are determined to protect the operator's hand against accidental contact with the teeth of the racks when operating the support (1).

8. A coupler head or tow-hook support according to claim 1, characterized in that the operating handle (20) of the support (1) is situated in a vertical plane as close as possible to that which passes through the centre of gravity of the unit.

# FIG-1

# FIG-2

# FIG-3